# EUROPÄISCHE PATENTSCHRIFT

(11) **EP 3 261 149 B1**
(45) Veröffentlichungstag und Bekanntmachung des Hinweises auf die Patenterteilung: **15.09.2021**
(21) Anmeldenummer: 16175222.5
(22) Anmeldetag: 20.06.2016
(51) Int. Cl.: H01M 50/20, B60K 1/04, B62D 21/15, B62D 25/20, B62D 27/06, B62D 25/02, F16B 2/14, F16B 5/06

(54) **BEFESTIGUNGSANORDNUNG**
MOUNTING ASSEMBLY
DISPOSITIF DE FIXATION

(43) Veröffentlichungstag der Anmeldung: 27.12.2017
(73) Patentinhaber: Magna Steyr Fahrzeugtechnik AG & Co KG, 8041 Graz (AT)
(72) Erfinder: ERLACHER, Manuel, 9545 Radenthein (AT); PLANKA, Franz, 9433 St. Andrä (AT); ZACHNEGGER, Harald, 8041 Graz (AT)
(74) Vertreter: Zangger, Bernd

(56) Entgegenhaltungen:
- WO-A1-2015/090684
- DE-A1-102010 050 609
- DE-A1-102014 215 513
- FR-A1- 2 961 442
- GB-A- 1 445 970
- US-A1- 2013 037 337

## Beschreibung

### Gebiet der Erfindung

Die vorliegende Erfindung betrifft eine Befestigungsanordnung einer Komponente für ein Fahrzeug, umfassend die Komponente, ein tragendes Bauteil des Fahrzeugs und zumindest ein Befestigungsmittel, wobei die Komponente mittels des zumindest einen Befestigungsmittels an dem tragenden Bauteil des Fahrzeugs befestigt ist.

### Stand der Technik

Befestigungen von Komponenten an einem tragenden Bauteil eines Fahrzeuges sind zum Aufbau des Fahrzeuges als bewegliche Einheit erforderlich und üblich. Die tragenden Bauteile des Fahrzeuges bilden in der Regel dessen Karosserie. Typischerweise erfolgen die Befestigungen an der Karosserie durch Verschrauben.

Verschraubte Komponenten können bei einem Unfall aber aufgrund der Steifigkeit der Verbindung eine unerwünschte Blockbildung verursachen und hohe Belastungsspitzen für die Insassen erzeugen sowie sicherheitskritische Komponenten beschädigen.

Zur Reduzierung möglicher Unfallfolgen wurden bereits verschiedene Maßnahmen vorgeschlagen.

So offenbart zum Beispiel die DE 10 2012 008 793 A1 eine Batterie für einen Kraftwagen, mit einem Gehäuse, wobei an einer Außenseite des Gehäuses wenigstens ein Lastverteilungselement angeordnet ist, wobei das Lastverteilungselement als Schaumelement, insbesondere Strukturschaum, ausgebildet sein kann.

Die DE 10 2011 016 081 A1 offenbart eine Vorrichtung zur Aufnahme einer Batterie, mit einer Haltevorrichtung, welche in oder an einem Fahrzeug anordenbar ist, wobei die Haltevorrichtung eine Anzahl von deformierbaren Befestigungselementen umfasst, wobei die Befestigungselemente jeweils Feder- und/oder Dämpfungselemente sind.

Aus der GB 1 445 970 A ist ein Fahrzeug mit einem schützenden Stoßfänger bekannt, mit Stoßfängerträgerarmen, die zur Befestigung am Fahrzeug Flansche umfassen, die in ein komprimierbares Material eingebettet sind.

Die DE 10 2010 050609 A1 offenbart eine Halteanordnung eines Trägerelements für ein Bauteil an einer Karosserie eines Kraftwagens, bei welcher das Trägerelement, über welches die Komponente an der Karosserie befestigbar ist, an der Karosserie gehalten ist und wenigstens eine einem an das Trägerelement angrenzenden und an der Karosserie gehaltenen weiteren Bauteil zugewandte und zumindest bereichsweise schräge Wandung aufweist, wobei die schräge Wandung in Fahrzeughochrichtung schräg verlaufend ausgebildet ist.

Aus der WO 2015/090684 A1 ist eine Massekopplungsanordnung für ein Fahrzeug bekannt, mit einem Masseaufnahmeelement zur Aufnahme eines Masseobjektes, mit einem Element, das mit dem Masseaufnahmeelement verbunden ist und mit mindestens einem Kopplungsmittel, das dazu geeignet ist, das Masseaufnahmeelement mit einer teilweise mit dem Fahrzeug fest verbundenen Fahrzeugstruktur zu koppeln oder zumindest teilweise von einer Fahrzeugstruktur zu entkoppeln, wobei über das Kopplungsmittel eine Reib- oder Klemmkraft auf das Masseaufnahmeelement ausgeübt werden kann. Das Kopplungsmittel kann mindestens ein Haltemittel umfassen, das als Klemmverbindung, Keilverbindung oder Kegelverbindung ausgeführt ist.

Die DE 10 2014 215513 A1 offenbart eine Batteriehalterungsvorrichtung mit einer Führungsvorrichtung, welche dazu ausgebildet ist, eine Fahrzeugbatterie aufzunehmen; mindestens einem Halteelement, welches dazu ausgebildet, in einem ersten Betriebszustand eine in der Führungsvorrichtung aufgenommene Fahrzeugbatterie bis zu einem ersten maximalen Rückhaltekraftwert mechanisch fest zu halten und in einem zweiten Betriebszustand die in der Führungsvorrichtung aufgenommenen Fahrzeugbatterie bis zu einem zweiten maximalen Rückhaltekraftwert mechanisch fest zu halten; und einem Aktuatorsystem mit mindestens einem Aktor, welcher dazu ausgelegt ist, das mindestens eine Halteelement von dem ersten Betriebszustand in den zweiten Betriebszustand zu bringen.

Aus der US 2013/037337 A1 ist eine Befestigungsvorrichtung zur lösbaren Befestigung einer wiederaufladbaren Batterie an einer Tragkonstruktion eines Kraftfahrzeugs bekannt, wobei die Befestigungsvorrichtung umfasst: eine Verriegelung, die an der wiederaufladbaren Batterie vorgesehen ist; und einen Haltevorsprung, der an der wiederaufladbaren Batterie vorgesehen und für eine Bewegung in Bezug auf die Verriegelung entlang einer Bewegungsspur in Richtung einer Endposition konfiguriert ist, um die wiederaufladbare Batterie an der Tragkonstruktion zu befestigen, wobei die Verriegelungsklinke zum Schwenken um eine Schwenkachse zwischen einer Entriegelungsposition, in der sich die Verriegelungsklinke außerhalb der Bewegungsbahn des Haltevorsprungs befindet, und einer Verriegelungsposition, in der die Verriegelungsklinke in die Bewegungsbahn des Haltevorsprungs ragt und dort hinter dem Haltevorsprung eingreift, wenn sich der Haltevorsprung in der Endposition befindet, konfiguriert ist.

Die FR 2 961 442 A1 offenbart ein Batteriepack welches umfasst: ein Paar von Batteriemodulen, die jeweils einen Hauptkörper aufweisen, der in einer Nebeneinanderrichtung nebeneinander angeordnet ist; wobei das erste der beiden Module des Paares auf einer der Flächen des Hauptkörpers gegenüber dem zweiten Modul ein keilförmiges Element aufweist, das sich in Richtung des zweiten Moduls erstreckt und in dieser Richtung in der Höhe abnimmt, um über das Element zu gleiten, wobei sich das zweite Modul in der Überlagerungsposition in einer Richtung, die als Überlagerungsrichtung bezeichnet wird, befindet, senkrecht zur Nebeneinanderrichtung, wenn mindestens einem von ihnen eine Verschiebung in eine Richtung auferlegt wird mit einer Komponente, die parallel zur ursprünglichen Nebeneinanderrichtung ist und dazu ausgelegt ist, die Module näher zusammenzubringen.

### Zusammenfassung der Erfindung

Es ist eine Aufgabe der Erfindung, eine Befestigungsanordnung einer Komponente in einem Fahrzeug anzugeben, die das Auftreten von Belastungsspitzen für Insassen des Fahrzeuges sowie Schäden an Komponenten des Fahrzeuges reduzieren kann.

Die Lösung der Aufgabe erfolgt durch eine Befestigungsanordnung einer Komponente für ein Fahrzeug gemäß Anspruch 1.

Die Befestigungsanordnung umfasst die Komponente, ein tragendes Bauteil des Fahrzeugs und zumindest ein Befestigungsmittel, wobei die Komponente mittels des zumindest einen Befestigungsmittels an dem tragenden Bauteil des Fahrzeugs befestigt ist, wobei das Befestigungsmittel ein Spannelement aufweist, wobei das Spannelement in einem Normalzustand die Befestigung der Komponente über das Befestigungsmittel verstärkt, wobei das Spannelement bei Einwirken einer äußeren Kraft selbsttätig, das heißt mittels der Energie der äußeren Kraft, in einen Unfallzustand übergeht, in dem das Spannelement die Befestigung der Komponente über das Befestigungsmittel lockert.

Erfindungsgemäß ist eine Komponente an einem tragenden Bauteil, insbesondere an der Karosserie, bevorzugt an einem oder mehreren Schwellern, befestigt, wobei die Befestigung im Normalzustand, das heißt wenn keine Unfallsituation vorliegt, fest ist, da mittels eines Spannelements, das in diesem Normalzustand bevorzugt eine Spannung aufweist, auf das Befestigungselement so eingewirkt wird, dass die Befestigung ausreichend fest für einen Normalbetrieb des Fahrzeuges ist.

Wenn es zu einem Unfall kommt, insbesondere zu einem seitlichen Aufprall auf das Fahrzeug bzw. den Bereich des Fahrzeuges in dem die Komponente verbaut ist, wird das Spannelement vorzugsweise entspannt, so dass die Befestigung über das Befestigungsmittel gelockert wird und die Komponente somit weniger fest an der tragenden Struktur befestigt ist. Bevorzugt wird das Befestigungsmittel, zumindest bei kleineren Aufprallenergien, jedoch nicht beschädigt, so dass die Befestigung an sich auch aufrecht bleibt und nicht gänzlich entfällt.

Hierdurch ergibt sich insgesamt im Fall eines Unfalls eine Entkoppelung der Komponente von der Karosserie und somit eine geringere Blockbildung durch steif verbundene Bauteile, sowie geringere Belastungsspitzen. Im Normalzustand ist die Komponente dennoch in den Steifigkeitsverbund der Karosserie eingebunden, wodurch es bei anderen Karosserieteilen zu Einsparungen kommt bzw. diese leichter und mit weniger Steifigkeit ausgeführt werden können.

Erfindungsgemäß umfasst das Spannelement zumindest zwei Keile. Ein Keil kann insbesondere durch Krafteinwirkung von Seiten seines spitzen Winkels aus seiner Position verschoben werden um ein durch den Keil gestärktes Befestigungsmittel zu lockern. Im Normalzustand wird der Keil durch Haftreibung an seinen Seitenflächen in Position gehalten.

Erfindungsgemäß umfasst das Spannelement zwei Keile deren Seitenflächen zumindest im Normalzustand übereinanderliegen und bei Einwirken einer äußeren Kraft gegeneinander verschoben werden.

Erfindungsgemäß ist ein Überstandselement vorgesehen, wobei das Überstandelement einen Überstand gegenüber dem tragenden Bauteil aufweist und mit einem Keil verbunden oder einstückig ist, so dass bei Einwirken der äußeren Kraft aus Richtung des Überstands das Überstandselement vor dem tragenden Bauteil von der Krafteinwirkung getroffen wird und auf den Keil einwirkt. Die Lockerung der Befestigung und Entkoppelung der Komponente kann so auftreten bevor die tragende Struktur beschädigt wird.

Der Überstand ist dazu bevorzugt an der Seite des spitzen Winkels des Keils angeordnet, so dass dieser in Richtung zu seiner Höhe aus seiner Position herausgeschoben werden kann, wenn die Haftreibung überwunden wird. Der Überstand kann ein separates Übertragungselement, beispielsweise ein Stift, sein oder einstückig mit dem Keil ausgebildet sein.

Das Befestigungsmittel ist vorzugsweise eine Schraubverbindung. Das Spannelement ist dann an der Schraube angeordnet, insbesondere so, dass die Schraube durch eine Öffnung im Spannelement, insbesondere im Keil bzw. in den Keilen, durchtritt. Bevorzugt weist die Schraubverbindung auch eine Mutter bzw. Mutternplatte auf. Bevorzugt ist das Spannelement zwischen einem Kopf der Schraube und der Mutter bzw. der Mutternplatte der Schraube angeordnet. Insbesondere kann das Spannelement zwischen der Komponente und dem Kopf oder der Mutter der Schraube im Normalzustand eingespannt sein.

Das Spannelement weist bevorzugt ein Spiel am Befestigungsmittel auf, so dass im Unfallzustand des Spannungselements eine Relativbewegung zwischen Spannelement und Befestigungsmittel ermöglicht ist. Das Spiel kann insbesondere durch ein Langloch im Keil bzw. in den Keilen erreicht werden, oder durch ein Loch das einen größeren Durchmesser aufweist, als die Schraube.

Vorzugsweise weist die Komponente ein Spiel am Befestigungsmittel auf, so dass im Unfallzustand des Spannungselements eine Relativbewegung zwischen Komponente und Befestigungsmittel ermöglicht ist. Auch dieses Spiel kann bevorzugt durch ein Langloch oder überdimensioniertes Loch in der Komponente zur Aufnahme der Schraube ausgebildet werden.

Bevorzugt umfasst die Befestigungsanordnung zumindest zwei Befestigungsmittel und zumindest zwei den Befestigungsmitteln zugeordnete Spannelemente, wobei die Komponente mittels beider Befestigungsmittel an einem tragenden Bauteil des Fahrzeugs befestigt ist, wobei die zwei Spannelemente durch ein Koppelelement verbunden sind, so dass beim Übergang eines der beiden Spannelemente in den Unfallzustand durch Einwirken einer äußeren Kraft, selbsttätig auch das andere Spannelement in den Unfallzustand übergeht, so dass beide Befestigungen über das Befestigungsmittel gelockert werden. Das tragende Bauteil an dem die Komponente befestigt ist kann an beiden Befestigungsmittels das selbe Bauteil sein oder auch ein anderes tragendes Bauteil des selben Fahrzeuges, beispielsweise der andere Schweller des Fahrzeuges. Durch ein derartiges Koppelelement kann bei Auftreten eines Unfalls an einer Seite oder einem Bereich des Fahrzeuges auch ein weiteres, nicht direkt betroffenes Befestigungsmittel, gelockert werden.

Das Koppelelement kann insbesondere eine Stange, eine Platte oder einen Seilzug umfassen.

Es können auch Koppelelemente bidirektional angeordnet sein, so dass eine Krafteinwirkung auf das jeweils andere Befestigungsmittel übertragen werden kann.

Die Koppelelemente können insbesondere als Stangen ausgebildet sein, die zwischen der Höhe-Seite eines auslösenden Keils und dem spitzen Winkel bzw. der Schmalseite eines Ziel-Keils angeordnet sind.

Ein Fahrzeug kann erfindungsgemäß zumindest eine Befestigungsanordnung wie beschrieben umfassen. Der tragende Bauteil kann insbesondere ein Karosserieteil sein, wie beispielsweise ein Schweller.

Die Komponente, die erfindungsgemäß befestigt wird, kann eine Hochvoltbatterie oder ein sonstiger Energiespeicher des Fahrzeuges sein, insbesondere eine Antriebsbatterie eines Elektro- oder Hybridfahrzeuges oder ein Tank für ein flüssiges oder gasförmiges Medium.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer erfindungsgemäßen Befestigungsanordnung in einem Normalzustand (links) und in einem Unfallzustand (rechts) von der Seite.
- Fig. 2: ist eine Schnittansicht einer erfindungsgemäßen Befestigungsanordnung mit zwei Befestigungsmitteln und Koppelelementen von der Seite.
- Fig. 3: ist eine Ansicht von oben auf eine erfindungsgemäße Befestigungsanordnung gemäß Fig. 2.
- Fig. 4: ist eine Schnittansicht einer erfindungsgemäßen Befestigungsanordnung in einem Normalzustand in einer weiteren Ausführungsform.
- Fig. 5: ist eine Ansicht von oben auf eine erfindungsgemäße Befestigungsanordnung gemäß Fig. 4
- Fig. 6: ist eine Schnittansicht einer erfindungsgemäßen Befestigungsanordnung mit zwei Befestigungsmitteln und Koppelelement von der Seite in einer weiteren Ausführungsform.
- Fig. 7: ist eine Ansicht von oben auf eine erfindungsgemäße Befestigungsanordnung gemäß Fig. 5 in einem Normalzustand.
- Fig. 8: ist eine Ansicht von oben auf eine erfindungsgemäße Befestigungsanordnung gemäß Fig. 5 in einem Unfallzustand.

### Detaillierte Beschreibung der Erfindung

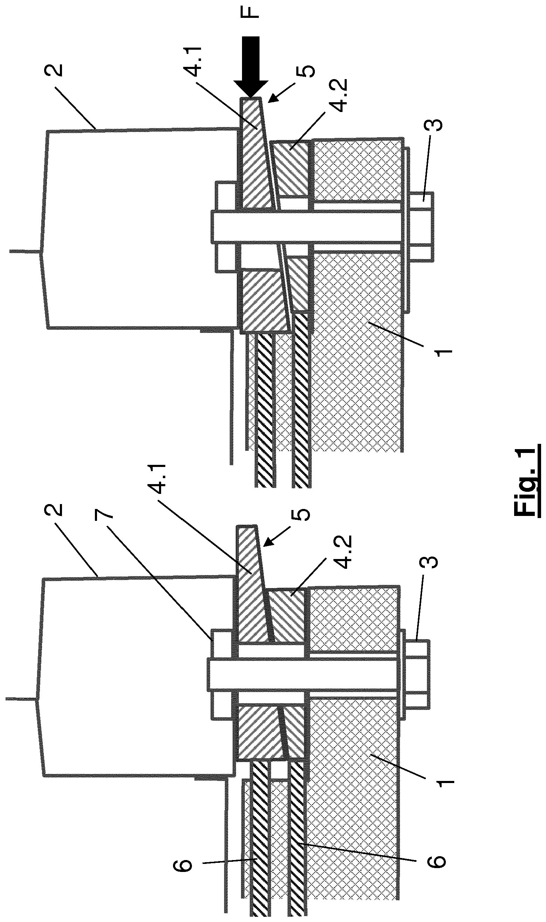

In Fig. 1 ist eine erfindungsgemäße Befestigungsanordnung in einem Normalzustand (linke Abbildung) und in einem Unfallzustand (rechte Abbildung) schematisch dargestellt.

Die Befestigungsanordnung umfasst eine Komponente 1, nämlich eine Antriebsbatterie oder einen sonstigen Energiespeicher, die in einem Fahrzeug, nämlich an einem tragenden Bauteil 2 des Fahrzeugs, wie insbesondere einem Schweller, befestigt wird mittels einer Schraubverbindung als Befestigungsmittel 3. Die Schraubverbindung umfasst eine Schraube mit Kopf, wobei der Kopf an einer vom Schweller abgewandten Oberfläche der Komponente 1 anliegt und andererseits eine Mutternplatte 7, die an einer Fläche des Schwellers 2 anliegt, so dass Schweller 2 und Batterie 1 zumindest im links dargestellten Normalzustand, also einem üblichen Betriebszustand des Fahrzeugs, gegeneinander gepresst werden.

Zwischen einer dem tragenden Bauteil 2 zugewandten Fläche der Komponente 1 und der Befestigungsfläche des tragenden Bauteils 2 ist ein Spannelement 4.1, 4.2 angeordnet. Das Spannelement 4.1, 4.2 besteht aus zwei Keilen, nämlich einem in der Fig. 1 oberen Keil 4.1, der dem tragenden Bauteil 2 benachbart angeordnet ist und einem in der Fig. 1 unteren Keil 4.2, der der Komponente 1 benachbart angeordnet ist. Seitenflächen der beiden Keile liegen im Normalzustand (Abbildung links) übereinander , wobei die Höhen der Keile in entgegengesetzte Richtungen weisen, nämlich die Höhe des Keils 4.1 nach links und die Höhe des Keils 4.2 nach rechts. Bei Einwirken einer äußeren Kraft F (Abbildung rechts) auf die schmale Seite (Seite des spitzen Winkels des Keils) eines der beiden Keile - hier auf den oben liegenden Keil 4.1 - werden die übereinanderliegenden Seitenflächen der Keile 4.1, 4.2 gegeneinander verschoben und so die beiden Keile 4.1, 4.2 entspannt und die Befestigung der Komponente 1 am tragenden Bauteil 2 mittels Schraubverbindung 3 im rechts dargestellten Unfallzustand gelockert. An den Keilen 4.1 und 4.2 sowie an der Komponente 1 ist ein Spiel zur Schraubverbindung 3 hin vorgesehen, beispielsweise durch Ausbildung von Langlöchern.

Das Befestigungsmittel muss erfindungsgemäß nicht eine Schraubverbindung sein. Beispielsweise wäre es auch möglich, einen Stift als Befestigungsmittel an dem tragenden Bauteil 2 und / oder an der Komponente 1 zu verschweißen und die Komponente 1 mit den Spannelementen 4.1 und 4.2 sowie dem tragenden Bauteil 2 zu verspannen.

Damit die Lockerung der Befestigung vor einer möglichen Deformation der Komponente 1 und des tragenden Bauteils 2 erfolgt, weist der obere Keil 4.1 ein Überstandselement 5 auf, dass sowohl gegenüber dem tragenden Bauteil 2 als auch gegenüber der Komponente 1 seitlich übersteht, so dass der Lockerungsmechanismus bei einer einwirkenden seitlichen Kraft, beispielsweise durch seitliches Auftreffen auf einen Pfahl oder ähnliches, selbsttätig ausgelöst wird.

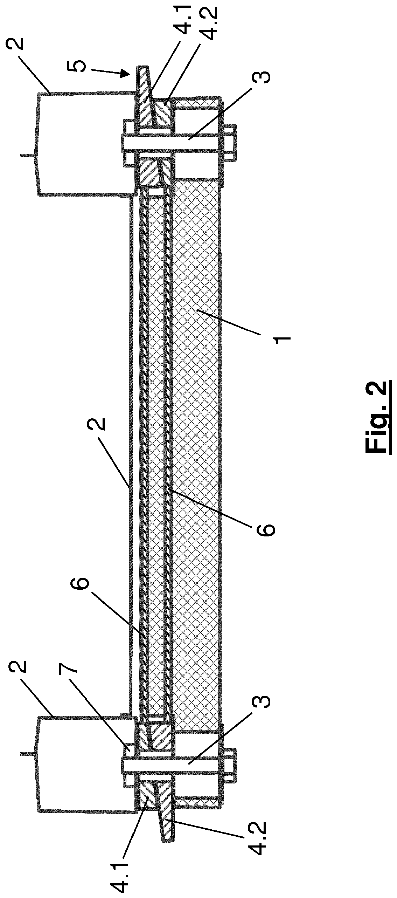

Bei Auslösen der Entkoppelung durch seitliches Verschieben des Keils 4.1 wird die Bewegung des Keils 4.1 mittels eines Kopplungselements 6, insbesondere hier mittels einer Stange, auf einen weiteren - in Fig. 2 links dargestellten - Keil 4.1 übertragen, welcher ebenfalls gegenüber seinem zugeordneten zweiten Keil 4.2 verschoben wird und hierdurch ein weiteres Befestigungsmittel 3 lockert. Das weitere Befestigungsmittel 3 kann insbesondere eine Befestigung der selben Komponente 1 an einem Schweller 2 an der gegenüberliegenden Fahrzeugseite darstellen. Hierzu weisen die Höhen der oben liegenden Keile 4.1 an beiden Befestigungsmitteln in die selbe Richtung, nämlich nach links, und somit an einer Befestigung in Richtung zum Inneren des Fahrzeuges und an der gegenüberliegenden zweiten Befestigung zum Äußeren des Fahrzeuges hin. Genau umgekehrt orientiert, also jeweils nach rechts, sind die Höhen der jeweils unten angeordneten Keile 4.2, und diese wiederum mittels einer Koppelstange 6 verbunden, so dass eine Übertragung einer von außen einwirkenden Kraft in beiden Richtungen stattfinden kann.

Die Spannelemente, insbesondere Keile 4.1 und 4.2, können über die gesamte Länge der Komponente 1 (in Fahrzeuglängsrichtung) verlaufen. Dies ist insbesondere dann vorteilhaft wenn Koppelstangen, insbesondere schmale Koppelstangen, zur Übertragung der Kraft eingesetzt werden.

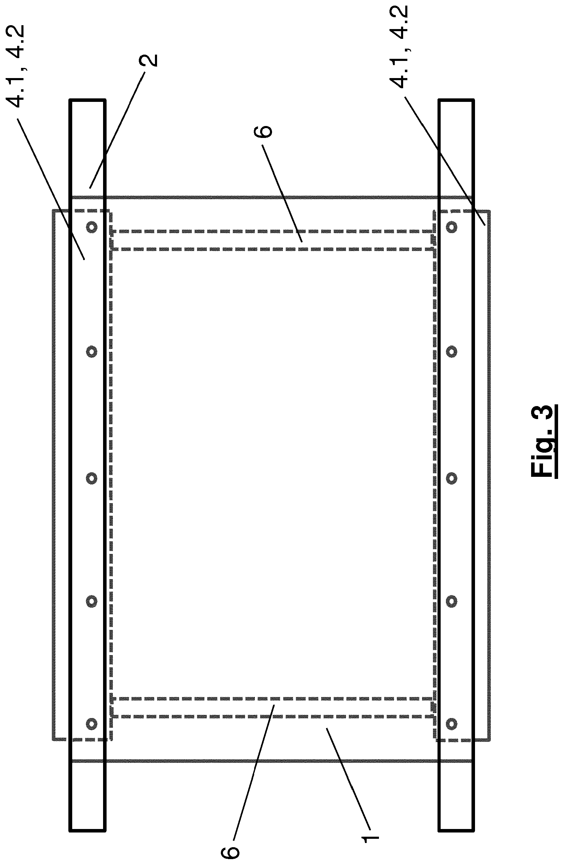

Fig. 3 zeigt die selbe Befestigungsanordnung in einer Ansicht von oben. Zumindest einer der Keile 4.1, 4.2 weist auf jeder Fahrzeugseite einen Überstand gegenüber dem tragenden Bauteil 2, also dem seitlichen Schweller des Fahrzeuges auf. Die Keile 4.1, 4.2 erstrecken sich in der Längsrichtung des Fahrzeuges über die Länge der befestigten Komponente 1 oder entlang des gesamten Befestigungsbereiches der Komponente 1 je Fahrzeugseitenbereich, in dem Spannelemente 4.1, 4.2 vorgesehen sind, so dass über einen einzigen Keil 4.1 sowie einzigen Keil 4.2 mehrere Schraubverbindungen als Befestigungsmittel 3 gespannt werden. An einer in Fahrtrichtung vorderen Position und einer hinteren Position sind Übertragungsstangen als Koppelelemente 6 vorgesehen. In Fig. 3 sind diese als schmale Stangen ausgeführt. Nicht in Fig. 3 dargestellt, allerdings auch möglich wäre weitere zusätzliche Koppelstangen 6 vorzusehen oder statt der separaten Koppelstangen breitere bzw. flächige Koppelelemente 6, also Koppelplatten, die im Wesentlichen jeweils sogar als ein Bauteile die gesamte Länge des Befestigungsbereiches je Fahrzeugseite, in dem Spannelemente 4.1 und 4.2 vorgesehen sind, überdecken können. Durch die breite Gestaltung der Spannelemente 4.1, 4.2, der Überstandselemente 5 und/oder der Koppelelemente bzw. Koppelplatten 6, deren Verlauf im Wesentlichen entlang des gesamten jeweiligen fahrzeugseitigen Befestigungsbereiches, in dem Spannelemente 4.1 und 4.2 vorgesehen sind, reicht, wird sichergestellt, dass unabhängig von der genauen Stelle an der beispielsweise ein Pfahl oder im Fahrzeugcrash ein anderes Fahrzeug auftrifft, eine Übertragung der Kraft auf die gegenüberliegende Seite sicher gestellt wird, da beispielsweise alle streifenförmig ausgeführten und über die breite der Komponente angeordneten Koppelelemente/Koppelstangen 6 durch die von außen einwirkende Kraft F angesteuert werden.

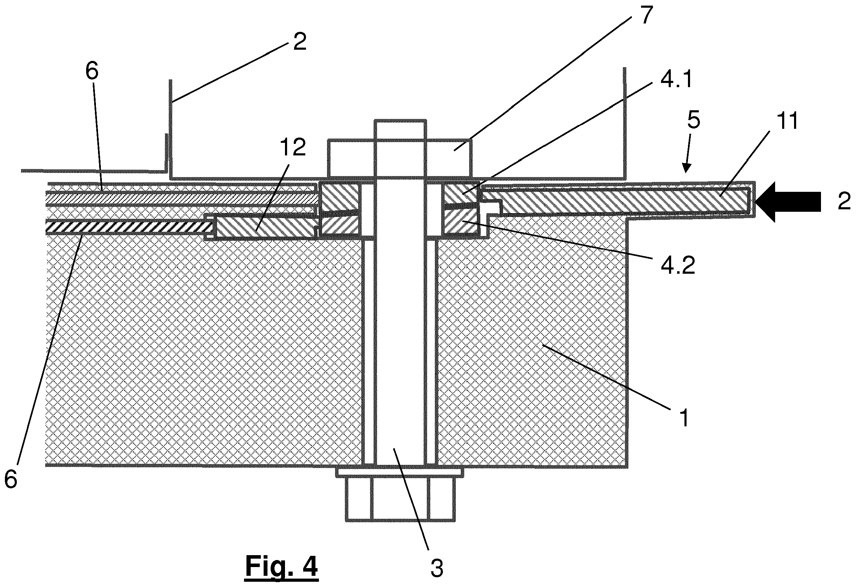

Als Alternative zur einstückigen Ausbildung des Überstandselements 5 durch die Keile 4.1 und 4.2 selbst, wie in Fig. 1 und Fig. 2 abgebildet, zeigt Fig. 4 eine Ausführungsform mit einem separaten äußeren Übertragungselement 11 als Überstandselement 5, dass bei seitlicher Verschiebung auf die Schmalseite des Keils 4.1 wirkt und somit den Keil 4.1 verschiebt. Weiters gezeigt ist ein separates inneres Übertragungselement 11, welches zwischen einem Spannelement 4.2 und dem Koppelelement 6, also dem Inneren der Komponente 1 zugewandt, angeordnet ist. Wie in Fig. 4 ersichtlich kann das Spannelement 4.1, 4.2, sowie das Koppelelement 6 auch in die Komponente 1 integriert sein, so dass keine zusätzliche Bauhöhe dafür erforderlich ist.

Hierbei können die Spannelemente 4.1 u. 4.2 wie in Fig. 3 ersichtlich wieder über die gesamte Länge der Komponente 1 bzw. im Wesentlichen entlang des gesamten jeweils fahrzeugseitigen Befestigungsbereiches jeweils als ein Bauteil verlaufen, ebenso das Überstandselement 5 und/oder die Übertragungselemente 11, 12. Um im Falle eines Aufpralles außerhalb des Längenbereiches der Komponente bzw. außerhalb des unmittelbaren Befestigungsbereiches der Komponente ein Lösen der Befestigung 3 zu bewirken, kann das Überstandselement 5 auch länger als die Länge des Befestigungsbereiches der Komponente ausgestaltet sein. Möglich wäre allerdings auch, die Übertragungselemente 11, 12 schmäler zu gestalten bzw. jeweils als separate Bauteile im Wesentlichen nur in denjenigen Bereichen anzuordnen, wo die jeweiligen Koppelstangen 6 verlaufen bzw. auf die Spannelemente 4.1, 4.2 treffen. Dies wäre besonders dann sinnvoll, wenn die Koppelelemente 6 nicht als schmale Stangen, sondern als (ein) flächiges Bauteil ausgeführt ist, dass sich möglichst über die gesamte Länge des Befestigungsbereiches der Komponente erstreckt.

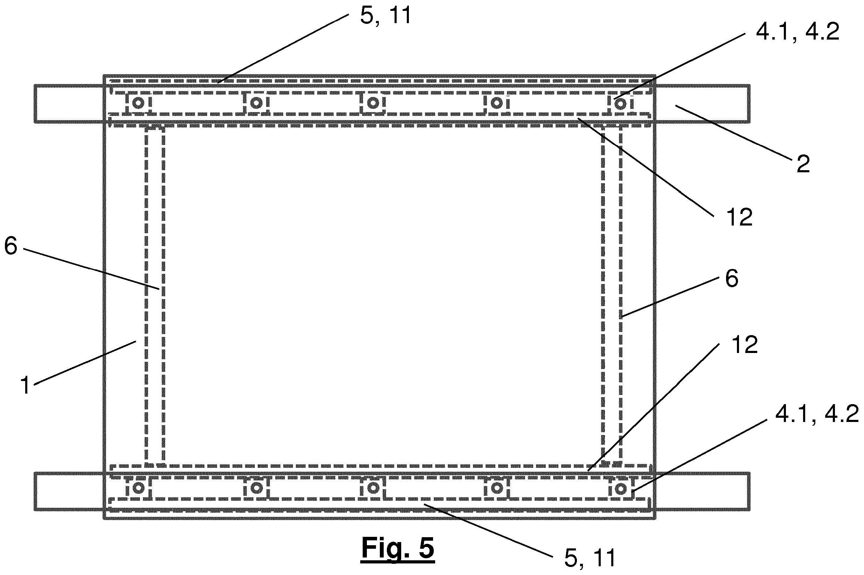

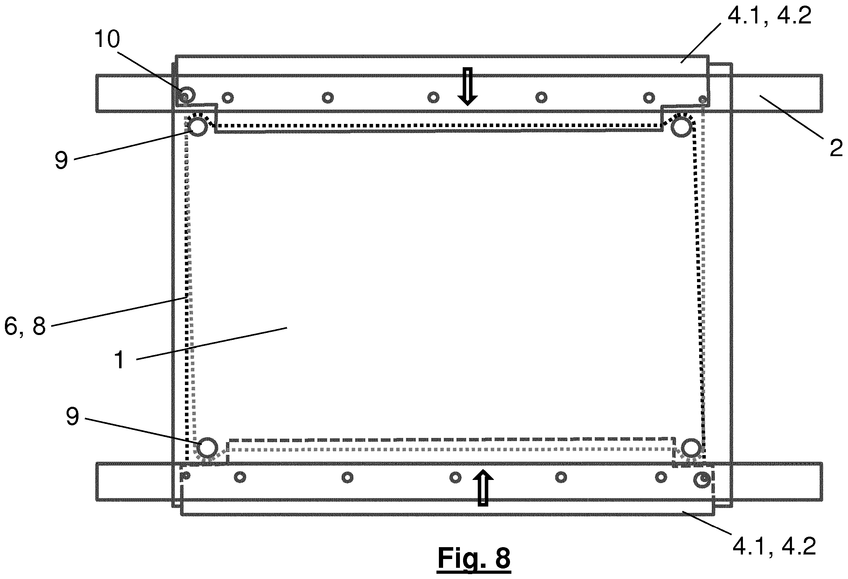

In Fig. 5 ist eine weitere Ausführung ersichtlich, in der die Überstandselemente 5 und die Übertragungselemente 11, 12 wieder über die gesamte Länge der Komponente 1 bzw. entlang des gesamten Befestigungsbereiches jeweils als ein Bauteil verlaufen, jedoch die Spannelemente 4.1 und / oder 4.2 jeweils schmäler ausgeführt sind und für jeden Befestigungsbereich jeweils ein separates Spannelement 4.1 und / oder 4.2 ausgeführt ist. Hierdurch ist einerseits eine selektivere Befestigung möglich sowie auch eine entsprechende Gewichtseinsparung. Die Koppelelemente 6 sind im Beispiel der Fig. 8 wieder als Koppelstreifen bzw. Koppelstangen ausgeführt.

Durch die breite Gestaltung der Überstandselemente 5 und /oder der inneren und/oder äußeren Übertragungselemente 11, 12 jeweils als ein Bauteil, deren Verlauf im Wesentlichen entlang des gesamten jeweiligen fahrzeugseitigen Befestigungsbereiches, in dem Spannelemente 4.1 u. 4.2 vorgesehen sind, reicht, wird sichergestellt, dass egal an welcher Stelle des Überstandselementes 5 ein Pfahl oder im Fahrzeugcrash ein anderes Fahrzeug auftrifft, alle streifenförmig ausgeführten und über die breite der Komponente angeordneten Koppelelemente/Koppelstangen 6 durch die von außen einwirkende Kraft F angesteuert werden.

Anstatt einer Ausführung des inneren Übertragungselementes 12 über im Wesentlichen die gesamte Lände des Befestigungsbereiches kann das innere Übertragungselement 12 beispielsweise ganz entfallen, wenn zu jedem separaten Spannelement 4.1 und /oder 4.2 jeweils der Breite der Spannelemente 4.1, 4.2 angepasste separate Koppelstangen 6 vorhanden sind oder die einzelnen Koppelstangen 6 ganz entfallen und stattdessen jeweils ein flächiges Koppelelement 6 vorhanden ist.

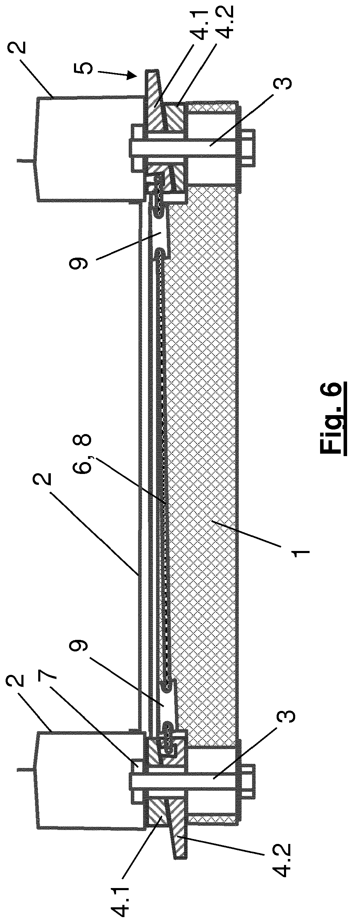

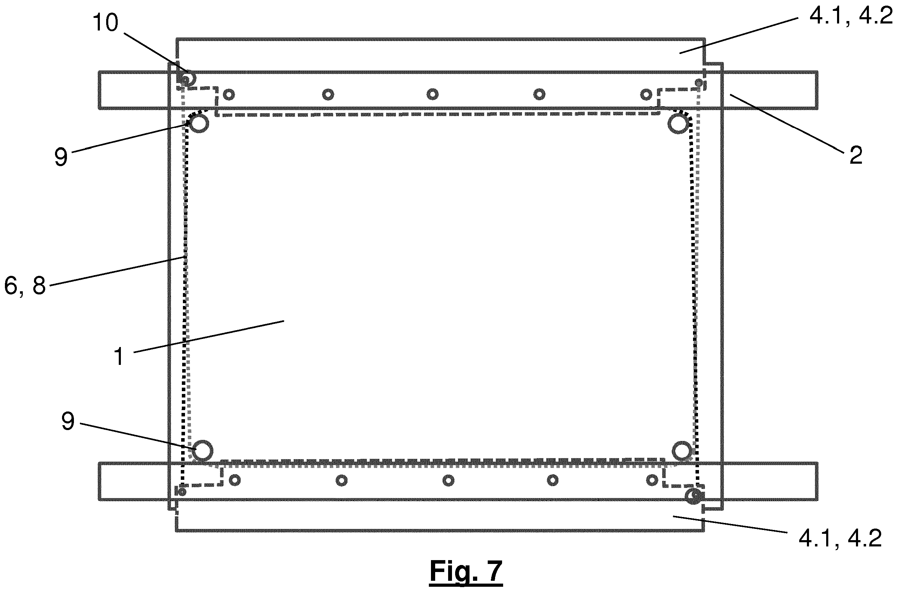

Fig. 6 zeigt eine weitere Ausführungsform der Koppelung zwischen einem rechten und einem linken Befestigungsmittel 3 in einem Fahrzeug. Als Koppelelement 6 wird ein Seilzug - oder mehrere Seilzüge - verwendet, mit zumindest einem Seil 8, dass - wie in Fig. 7 und 8 dargestellt - im Wesentlichen U-förmig oder auch um den gesamten Umfang der Komponente 1 umlaufen kann, sowie mit Umlenkrollen 9 zur Führung des Seils 8. Insbesondere können zwei U-förmig geführte Seile verwendet werden, die zueinander verkehrt ausgerichtet sind, wie in Fig. 7 und 8 gezeigt.

Fig. 7 stellt den Zustand des Seils 8 im Normalzustand, also bei gespannten Spannelementen 4.1, 4.2 dar. Fig. 8 zeigt die selbe Befestigungsanordnung im Unfallzustand, also bei gelockerten Spannelementen 4.1, 4.2, wobei die Keile 4.1 und/oder 4.2 gegenüber dem tragenden Bauteil 2 nach innen (Pfeilrichtung) verschoben sind und hierdurch ein an den Keilen 4.1, 4.2 geführtes Seil 8 spannen und somit den Keil 4.1, 4.2 der gegenüberliegenden Fahrzeug-Seite ebenfalls nach innen ziehen. Eine derartige Koppelung über einen Seilzug kann eine oder mehrere Spannvorrichtungen 10 für die Seile 8 umfassen.

Insgesamt wird erfindungsgemäß eine Komponente 1, in diesem Fall ein Batterieblock, an einer Karosserie 2 über mehrere Schraubstellen 3 verschraubt. Zwischen der Karosserie 2 und der Komponente 1 wird ein auf Keilen 4.1, 4.2 basierendes Spannelement mitverschraubt. Das Spannelement besteht bevorzugt aus zwei oder mehreren Keilen 4.1, 4.2 welche durch deren Oberflächenbeschaffenheit oder eine geeignete Formgebung zueinander in einem Normalzustand nicht verrutschen. Erst durch eine gezielte Belastung über eine von außen einwirkenden Kraft F, beispielsweise durch einen Pfahl oder ein anderes Hindernis, wird die Oberflächenreibung der Keile 4.1, 4.2 überwunden und die Verschraubung 3 gelockert. Dadurch kann sich die Komponente 1 in einer Richtung beispielsweise über ein Langloch in der Komponente 1 oder einer gleitenden bzw. losbrechenden Mutter im Schweller 2 über einen gewissen Bereich bewegen. Über ein Koppelelement 6, insbesondere über Schubstangen bzw. über einen Seilmechanismus, wird dann die zweite bzw. gegenüberliegende Schraubstellenseite gelockert.

### Bezugszeichenliste

- 1: Komponente
- 2: tragendes Bauteil
- 3: Befestigungsmittel
- 4.1: Spannelement, oberer Keil
- 4.2: Spannelement, unterer Keil
- 5: Überstandselement
- 6: Koppelelement7 Mutternplatte
- 8: Seil
- 9: Umlenkrolle
- 10: Spannvorrichtung
- 11: äußeres Übertragungselement
- 12: inneres Übertragungselement

- F: äußere Kraft

## Patentansprüche

1. Befestigungsanordnung einer Komponente (1) für ein Fahrzeug, umfassend die Komponente (1), ein tragendes Bauteil (2) des Fahrzeugs und zumindest ein Befestigungsmittel (3), wobei die Komponente (1) mittels des zumindest einen Befestigungsmittels (3) an dem tragenden Bauteil (2) des Fahrzeugs befestigt ist,
wobei das Befestigungsmittel (3) ein Spannelement (4.1, 4.2) aufweist, wobei das Spannelement (4.1, 4.2) in einem Normalzustand die Befestigung der Komponente (1) über das Befestigungsmittel (3) verstärkt, wobei das Spannelement (4.1, 4.2) bei Einwirken einer äußeren Kraft (F) selbsttätig in einen Unfallzustand übergeht, in dem das Spannelement (4.1, 4.2) die Befestigung der Komponente (1) über das Befestigungsmittel (3) lockert, **dadurch gekennzeichnet, dass** das Spannelement (4.1, 4.2) zumindest zwei Keile (4.1, 4.2) umfasst deren Seitenflächen zumindest im Normalzustand übereinanderliegen und bei Einwirken der äußeren Kraft (F) gegeneinander verschoben werden, wobei ein Überstandselement (5) vorgesehen ist, wobei das Überstandelement (5) einen Überstand gegenüber dem tragenden Bauteil aufweist und mit einem Keil (4.1, 4.2) verbunden oder einstückig ist, so dass bei Einwirken der äußeren Kraft (F) aus Richtung des Überstands das Überstandselement (5) vor dem tragenden Bauteil (2) von der Krafteinwirkung getroffen wird und auf den Keil (4.1, 4.2) einwirkt.

2. Befestigungsanordnung nach zumindest einem der vorhergehenden Ansprüche, wobei das Befestigungsmittel (3) eine Schraubverbindung ist.

3. Befestigungsanordnung nach zumindest einem der vorhergehenden Ansprüche, wobei das Spannelement (4.1, 4.2) ein Spiel am Befestigungsmittel (3) aufweist, so dass im Unfallzustand des Spannungselements (4.1, 4.2) eine Relativbewegung zwischen Spannelement (4.1, 4.2) und Befestigungsmittel (3) ermöglicht ist.

4. Befestigungsanordnung nach zumindest einem der vorhergehenden Ansprüche, wobei die Komponente (1) ein Spiel am Befestigungsmittel (3) aufweist, so dass im Unfallzustand des Spannungselements (4.1, 4.2) eine Relativbewegung zwischen Komponente (1) und Befestigungsmittel (3) ermöglicht ist.

5. Fahrzeug umfassend zumindest eine Befestigungsanordnung nach zumindest einem der vorhergehenden Ansprüche.

## Claims

1. Mounting assembly of a component (1) for a vehicle, comprising the component (1), a load-bearing structural element (2) of the vehicle and at least one mounting means (3), wherein the component (1) is mounted on the load-bearing structural element (2) of the vehicle by means of the at least one mounting means (3), wherein the mounting means (3) has a clamping element (4.1, 4.2), wherein, in a normal state, the clamping element (4.1, 4.2) reinforces the mounting of the component (1) via the mounting means (3), wherein, in the case of the action of an external force (F), the clamping element (4.1, 4.2) automatically transfers into an accident state in which the clamping element (4.1, 4.2) loosens the mounting of the component (1) via the mounting means (3), **characterized in that** the clamping element (4.1, 4.2) comprises at least two wedges (4.1, 4.2), the side surfaces thereof being superimposed at least in the normal state and being displaced relative to one another in the case of the action of the external force (F), wherein a projecting element (5) is provided, wherein the projecting element (5) has a projection relative to the load-bearing structural element and is connected to a wedge (4.1, 4.2) or is integral therewith, such that in the case of the action of the external force (F) from the direction of the projection, the projecting element (5) is affected by the action of force before the load-bearing structural element (2) and acts on the wedge (4.1, 4.2).

2. Mounting assembly according to Claim 1, wherein the mounting means (3) is a screw connection.

3. Mounting assembly according to at least one of the preceding claims, wherein the clamping element (4.1, 4.2) has a clearance relative to the mounting means (3), such that in the accident state of the clamping element (4.1, 4.2), a relative movement is permitted between the clamping element (4.1, 4.2) and the mounting means (3).

4. Mounting assembly according to at least one of the preceding claims, wherein the component (1) has a clearance relative to the mounting means (3), such that in the accident state of the clamping element (4.1, 4.2), a relative movement is permitted between the component (1) and the mounting means (3).

5. Vehicle comprising at least one mounting assembly according to at least one of the preceding claims.

## Revendications

1. Système de fixation d'un composant (1) destiné à un véhicule, ledit système comprenant le composant (1), un composant porteur (2) du véhicule et au moins un moyen de fixation (3), le composant (1) étant fixé au composant porteur (2) du véhicule à l'aide de l'au moins un moyen de fixation (3), le moyen de fixation (3) comportant un élément de serrage (4.1, 4.2), l'élément de serrage (4.1, 4.2) renforçant à l'état normal la fixation du composant (1) à l'aide du moyen de fixation (3), l'élément de serrage (4.1, 4.2) passant automatiquement, lorsqu'une force extérieure (F) agit, à un état d'accident dans lequel l'élément de serrage (4.1, 4.2) desserre la fixation du composant (1) à l'aide du moyen de fixation (3), **caractérisé en ce que** l'élément de serrage (4.1, 4.2) comprend au moins deux cales (4.1, 4.2) dont les surfaces latérales sont l'une au-dessus de l'autre au moins à l'état normal et se déplacent l'une vers l'autre lorsque la force extérieure (F) agit, un élément saillant (5) étant prévu, l'élément saillant (5) comportant une projection par rapport à l'élément porteur et étant relié à une cale (4.1, 4.2), ou étant d'une seule pièce avec celle-ci, de sorte que, lorsque la force extérieure (F) agit depuis la direction de la projection, l'élément saillant (5) est soumis à la force avant l'élément porteur (2) et agit sur la cale (4.1, 4.2).

2. Système de fixation selon la revendication 1, le moyen de fixation (3) étant une liaison par vis.

3. Système de fixation selon l'une au moins des revendications précédentes, l'élément de serrage (4.1, 4.2) présentant un jeu au niveau du moyen de fixation (3) de façon à permettre, lorsque l'élément de serrage (4.1, 4.2) est à l'état d'accident, un mouvement relatif entre l'élément de serrage (4.1, 4.2) et le moyen de fixation (3).

4. Système de fixation selon l'une au moins des revendications précédentes, le composant (1) présentant un jeu au niveau du moyen de fixation (3) de façon à permettre, lorsque l'élément de serrage (4.1, 4.2) est à l'état d'accident, un mouvement relatif entre le composant (1) et le moyen de fixation (3).

5. Véhicule comprenant au moins un système de fixation selon l'une au moins des revendications précédentes.
